# EUROPEAN PATENT SPECIFICATION

(11) **EP 1 999 690 B1**
(45) Date of publication and mention of the grant of the patent: **02.11.2011**
(21) Application number: 07763573.8
(22) Date of filing: 06.02.2007
(51) Int. Cl.: B60R 22/48

(54) **WIRELESS SOURCELESS SENSOR**
DRAHTLOSER UND QUELLENFREIER SENSOR
CAPTEUR SANS SOURCE SANS FIL

(30) Priority: 09.02.2006 US 772477 P; 01.02.2007 US 670240
(43) Date of publication of application: 10.12.2008
(73) Proprietor: Alps Automotive, Inc., Auburn Hills, MI 48326 (US)
(72) Inventor: SEGUCHI, Koji, Rochester Hills, MI 48309 (US)
(74) Representative: Palmer, Jonathan R.
(86) International application number: PCT/US2007/061644
(87) International publication number: WO 2007/092824

(56) References cited:
- WO-A1-2006/010702
- US-A- 5 528 219
- US-A1- 2003 022 118
- US-A1- 2003 209 893
- US-A1- 2004 119 599
- US-A1- 2004 124 741
- US-A1- 2005 061 568
- US-A1- 2005 280 561
- US-B1- 6 741 237

## Description

### BACKGROUND OF THE INVENTION

This invention relates to sensors, and more particularly, to a self-powered sensor that may be used in devices or structures for transporting persons or things.

Vehicle safety devices are designed to protect the occupants of a vehicle. A safety strap or harness may hold a person securely to a seat while a vehicle is moving. A lap belt and/or shoulder harness may prevent an occupant from striking the interior of a vehicle in the event of an accident or when the vehicle suddenly stops. While statistics suggest that there is a higher rate of survival when occupants remain in their seats, safety belts are not universally used.

In some instances, occupants may not realize that their safety belts are not engaged. In some vehicles, a safety belt anchored to a driver seat is monitored. When a clasp does not engage the ends of a driver's safety belt, a warming may issue. Some monitors require that power be sourced to the driver's safety bolt to detect when the safety belt is engaged. These monitors may not be used with other safety belts or active restrains due to wiring costs, wiring harness limitations, or electrical load limitations. In some systems it is impractical to wire removable vehicle seats. Therefore there is a need for a self-powered system that may monitor safety restraints.

US 2004/0119599 describes according to the preamble of claim 1 a status monitor incorporated into a seat belt buckle, with a corresponding receiver and operator signalling device located in an instrument panel.

The invention provides a wireless sourceless sensor as set out in claim 1, and a method as set out in claim 14.

### BRIEF DESCRIPTION OF THE DRAWINGS

The invention may be better understood with reference to the following drawings and description. The components in the figures are not necessarily to scale, emphasis instead being placed upon illustrating the principles of the invention. Moreover; in the figures, like referenced numerals designate corresponding parts throughout the different views.

Figure 1 shows a self-powered sensor within a safety belt buckle.

Figure 2 is a top view of the self-powered sensor within the safety belt buckle.

Figure 3 is a schematic of the self-powered sensor coupled to a transcoder.

Figure 4 is an alternative schematic of the self-powered sensor coupled to a transcoder.

Figure 5 is a side view of a self-powered sensor coupled to a toggle switch.

Figure 6 is a top view of the toggle switch of Figure 5.

Figure 7 is a side view of the self-powered sensor controlling the movement of a vehicle window.

Figure 8 is a second side view of the self-powered sensor controlling the movement of the vehicle window of Figure 7.

Figure 9 is a block diagram of a self-powered sensor.

Figure 10 is a block diagram of a self-powered sensor according to the invention.

Figure 11 is a block diagram of the self-powered sensor in communication with a receiver.

Figure 12 is a schematic of a self-powered sensor.

Figure 13 is an alternative schematic of a self-powered sensor.

Figure 14 is a block diagram of the self-powered sensor communicating a single event.

Figure 15 is a block diagram of a self-powered sensor communicating multiple events.

Figure 16 is a block diagram of a self-powered sensor communicating a safety belt buckle status.

Figure 17 is a block diagram of a self-powered sensor communicating a tailgate status.

Figure 18 shows removable and foldaway seats coupled to self-powered sensors.

Figure 19 is a process in which a self-powered sensor transmits an encrypted signal.

### DETAILED DESCRIPTION OF THE PREFERRED EMBODIMENTS

A self-powered sensor detects or measures an event by converting non-electrical energy into electrical energy. In some systems a physical pressure applied to an element within the self-powered sensor may generate electrical impulses. When embodied or integrated within a transmitter or transceiver, the electrical impulses may be regulated. The self-powered sensor may drive a transmitter or transceiver and an encoder. The encoder may be used in a wireless monitoring system, wireless control system, wireless entry system, or other wireless applications. In operation, a receiver may detect and validate a received message. If validated, the message may be processed or decrypted and processed to determine what has been identified or requested.

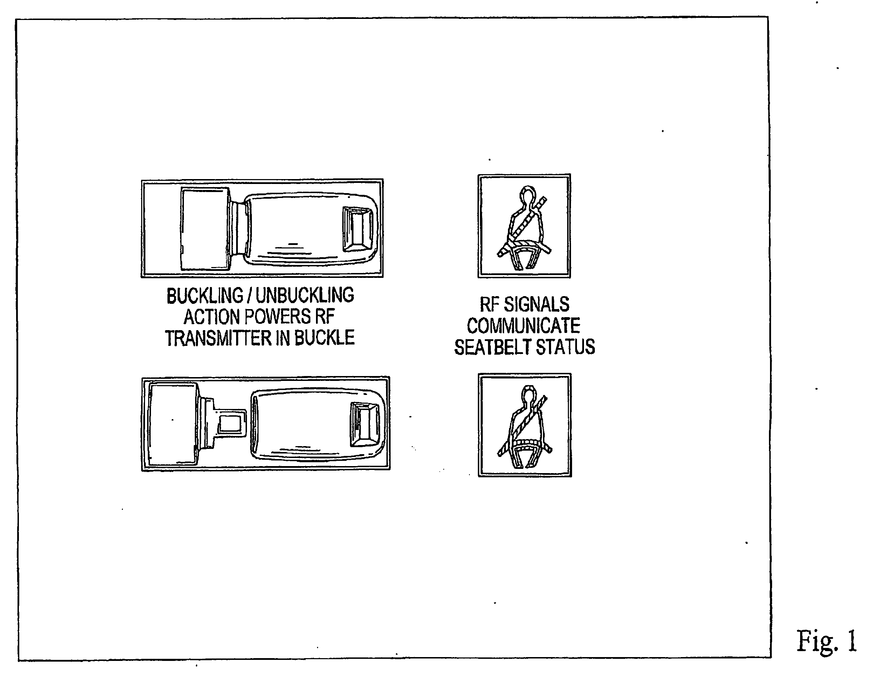

Figure 1 shows the self powered sensor integrated within a safety belt. The self-powered sensor is integrated or positioned within a female portion of a buckle. A transducer positioned near a proximal end of a clasp may detect a male end of the buckle. As the male end is inserted into the clasp, the mechanical stress of insertion is converted into electricity. The electricity is then converted into another form of energy. In Figure 1, the transducer generates electricity that sources a regulator that drives an encoder and transmitter. In Figure 1 the transmitter may wirelessly send encoded data to a receiver. The signal may be received and validated by a controller in a vehicle. When assigned unique identification codes, the self-powered sensor may identify the engagement of each safety belt or seat belt within a vehicle. A vehicle may be a device or structure for transporting persons or things (e.g., an automobile, truck, bus, or aircraft). Engagement may be determined by a valid message or in combination with a measured time a valid message is received. The message may or may not be encrypted.

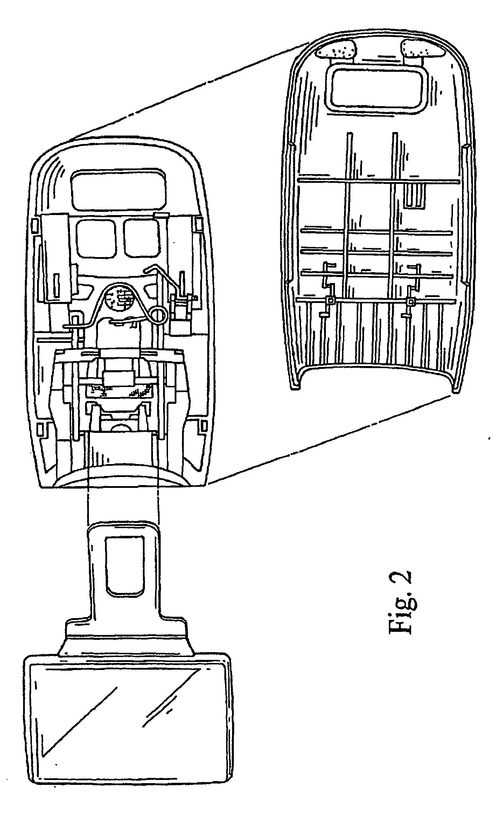

Figure 2 is a top view of the self-powered sensor within the safety belt of Figure 1. While the transducer is positioned near the proximal end of the clasp, in alternative systems the transducer may be positioned anywhere within or on the buckle. In some alternative systems it is positioned on or near a male end of the buckle.

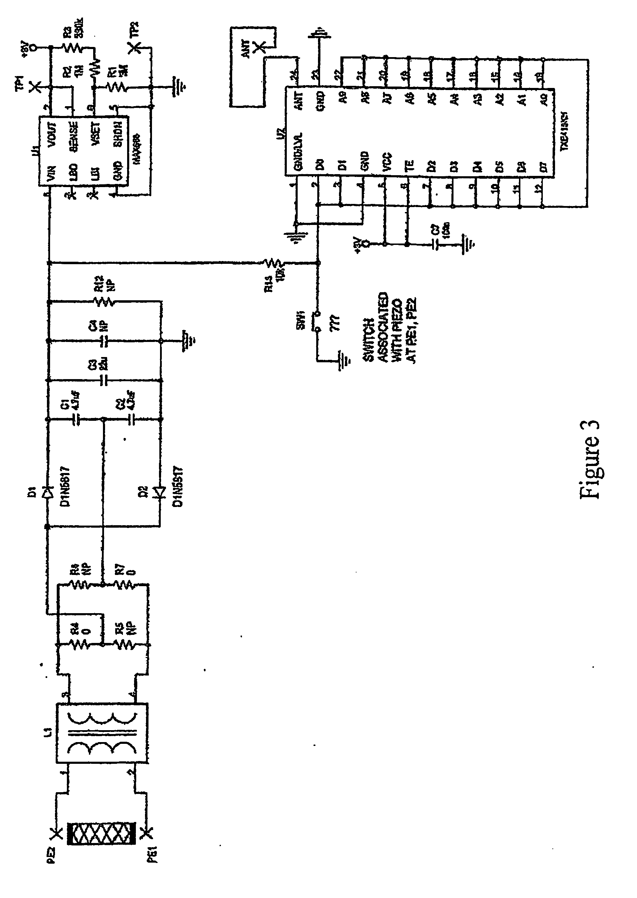

Figure 3 is a schematic of a self-powered sensor coupled to a transcoder. The transcoder converts one type of energy (electrical energy) into another (radio frequency). Through an electrical link a piezoelectric ceramic or element generates electricity when subject to a mechanical stress. The generated electricity or voltage is conditioned by active elements, linear elements, and elements that pass current in one direction. Despite variations in the conditioned voltage, a voltage regulator may substantially source a constant output voltage when an input voltage is detected. In Figure 3 the transcoder comprises an encoder such as a code hopping encoder that is integrated with or is a unitary part of a transmitter. In some systems the code hopping encoder may change a transmitted code word with almost every transmission. When a source voltage is generated by the voltage regulator, a message is first encrypted and then transmitted. In some systems a unique code word may be transmitted with the message. In other systems the message may be transmitted without encryption and code words.

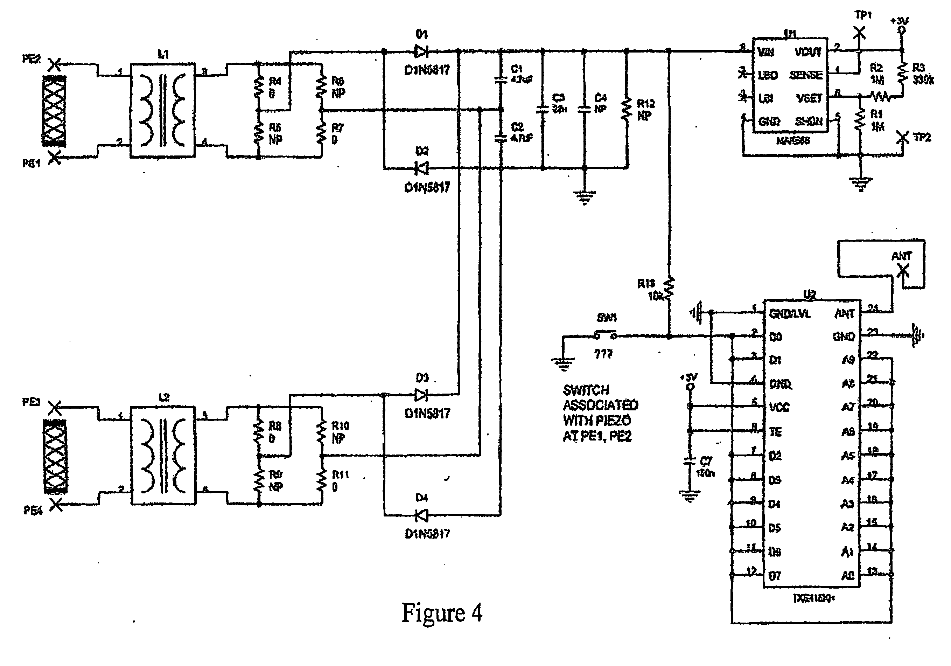

Figure 4 is a schematic of an alternative self-powered sensor coupled to a transcoder. Through an electrical link the piezoelectric ceramics or elements generate electricity when subject to a mechanical stress. The generated electricity or voltage is conditioned by active elements, linear elements, and diodes that control current flow. Despite variations in the conditioned voltage, a voltage regulator may source a substantially constant output voltage to the transcoder. In Figure 4 the transcoder comprises an encoder such as a code hopping encoder that is integrated with a transmitter. When a source voltage is received, a message is encrypted and transmitted to a receiver. In some systems a unique code word may be transmitted with the message. In other systems the message may not be encrypted or transmitted with code words.

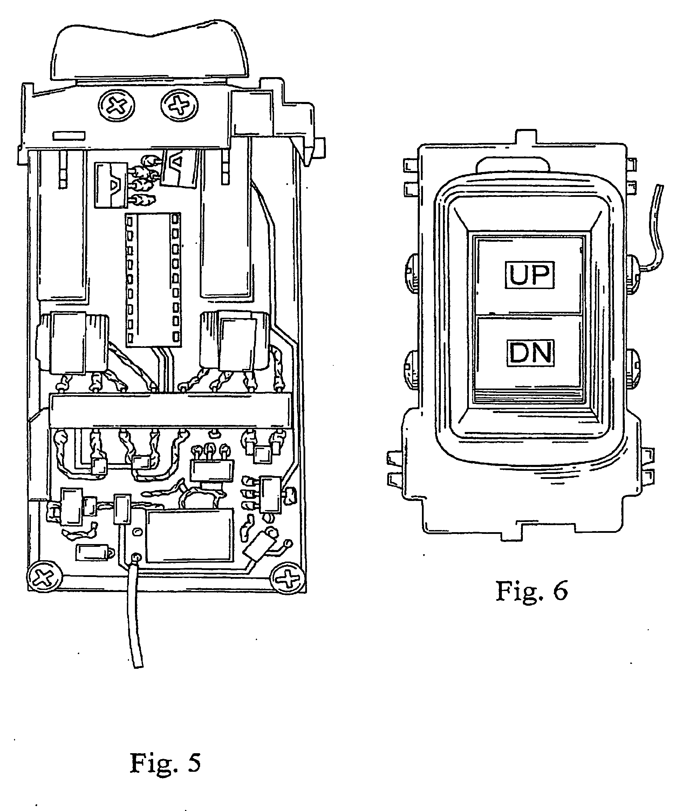

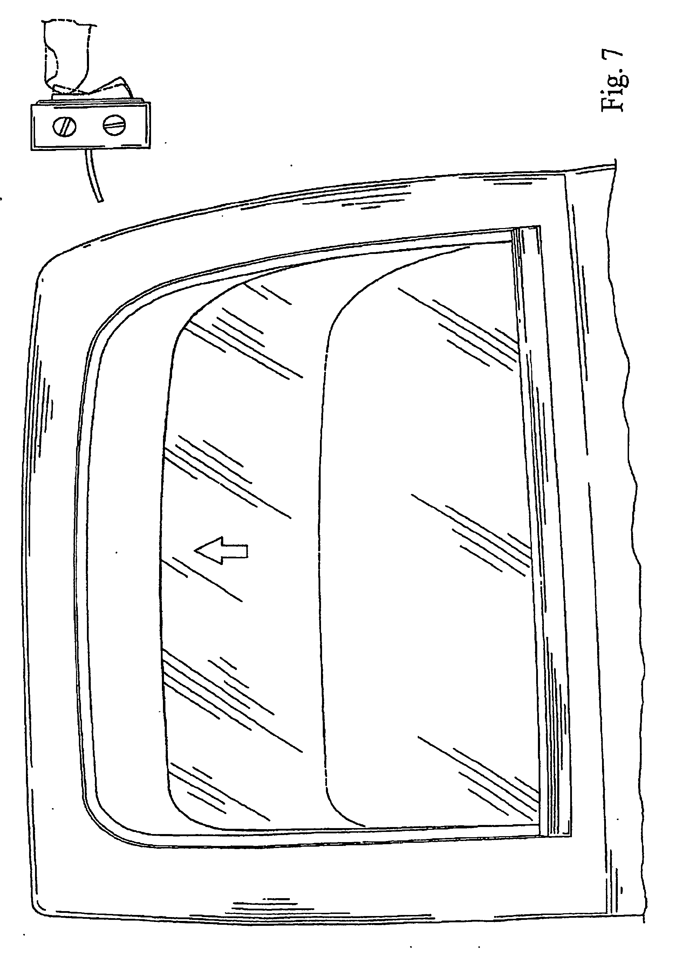

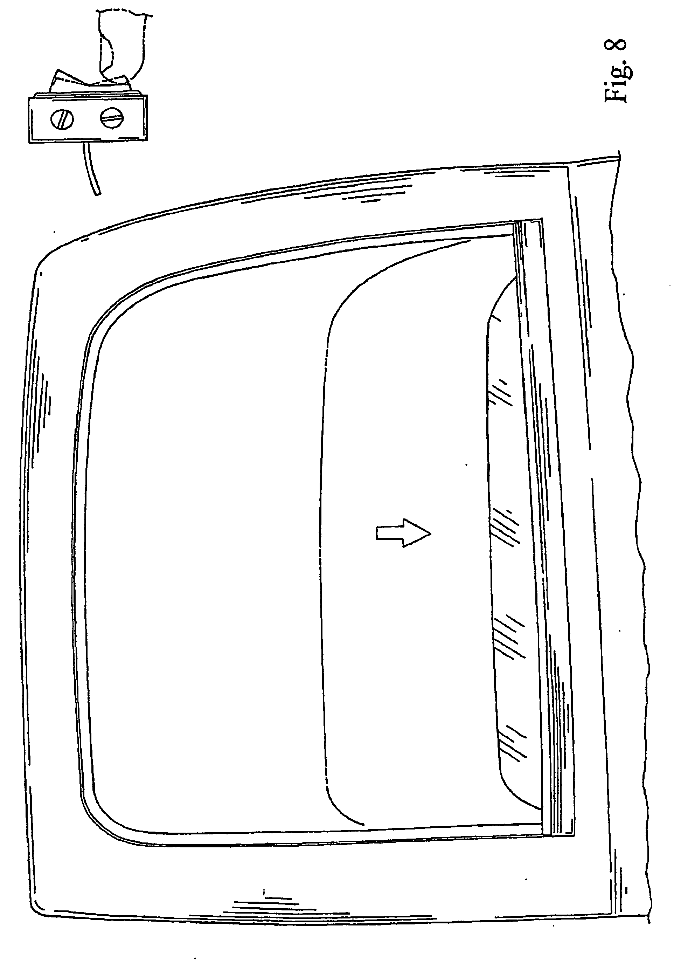

In Figures 5 and 6 the self-powered sensor is coupled to a switch. As shown in Figures 7 and 8, engagement of the switch, such as a toggle switch, may raise or lower one or more windows. The window may be raised or lowered to any position depending on the duration the switch is actuated. The switch may include an express down feature whereby one or more windows go down fully by engaging the down portion of the switch for a predetermined time.

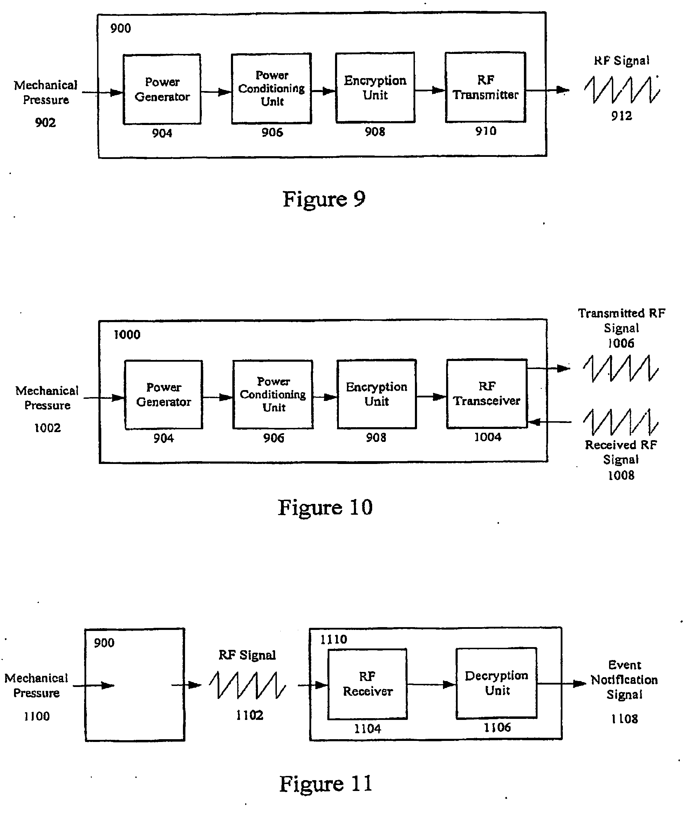

Figure 9 is a block diagram of a self-powered sensor 900. The sensor 900 includes a power generator 904, a power conditioning unit 906, an encryption unit 908, and a radio frequency transmitter 910. A mechanical pressure 902 may be applied to the power generator 904. The power generator 904 converts the mechanical pressure 902 into an electrical signal that may source a power conditioning unit 906. The power conditioning unit 906 comprises passive and active circuit elements and a voltage regulator. The unit 906 may convert the electrical signal and source the voltage regulator. The voltage regulator may generate a substantially constant voltage and source an encryption unit 908. In Figure 9, the encryption unit 908 may encode a message into data packets to be transmitted through a radio frequency transmitter 910. The radio frequency transmitter 910 transmits a radio frequency signal 912 to a receiver. In some systems, the radio frequency signal 912 may be encrypted and/or contain code words. In other systems, the radio frequency signal 912 may be transmitted without encryption and/or code words. The radio frequency signal 912 may be transmitted at about 315 MHz, about 433 MHz, or at other frequencies, and may be transmitted at various word lengths and power levels.

Figure 10 is a block diagram of the self powered sensor 1000 of the invention. The sensor 1000 may include the power generator 904, the power conditioning unit 906, the encryption unit 908, and a radio frequency transceiver 1004. A mechanical pressure 1002 may be applied to the power generator 904, which converts the mechanical pressure 1002 into an electrical signal. The power generator 904 may be an element that generates electrical signals in response to a physical pressure, such as a piezoelectric ceramic or element; an element that generates electrical signals in response to a change in a magnetic field direction (e.g., an electro-dynamic generator); or a type of power generator that converts non-electrical energy into electrical energy. The electrical signal from the power generator 904 sources a power conditioning unit 906 that converts the electrical signal and sources a voltage regulator. The voltage regulator may generate a voltage that sources an encryption unit 908.

In Figure 10, the encryption unit 908 may encode a message into fixed or variable data packets to be transmitted through a radio frequency transceiver 1004. The radio frequency transceiver 1004 transmits a radio frequency signal 1006 to a receiver or transceiver. The radio frequency transceiver 1004 may also receive a radio frequency signal 1008 from a transmitter or transceiver. The received radio frequency signal 1008 may contain information to update the sensor, synchronize code words, or contain other information or commands. The radio frequency signals 1006 and 1008 may be transmitted and received at about 315 MHz, at about 433 MHz, or at other frequencies, and may be transmitted and received at various power levels.

Figure 11 is a block diagram of the self-powered sensor 900 in communication with a receiver 1110. The receiver 1110 includes a radio frequency receiver 1104 and a decryption unit 1106. A mechanical pressure 1100 may be applied to the power generator 904 within the sensor 900. The sensor 900 may transmit a radio frequency signal 1102 that may contain a message encoded into data packets. Redundant messages may be automatically transmitted to ensure the message is received at the receiver 1104. The receiver 1104 may receive and convert the radio frequency signal 1102 into data packets that may be communicated to the decryption unit 1106. The decryption unit 1106 may decode, process, and/or validate the data packets into an event notification signal 1108. The signal 1108 may be adapted to determine what has been identified or requested. The event notification signal 1108 may be transmitted over a vehicle data bus to electronic control units of a vehicle, such as an engine control module; body control module; heating, ventilating, and air conditioning ("HVAC") control module; or other control modules. The vehicle data bus may comprise a Controller Area Network ("CAN"), Local Interconnect Network ("LIN"), J1850, J1939, FlexRay, Media Oriented Systems Transport ("MOST"), DSI Bus, Intellibus, IDB-1394, SMARTwireX, or other vehicle data buses.

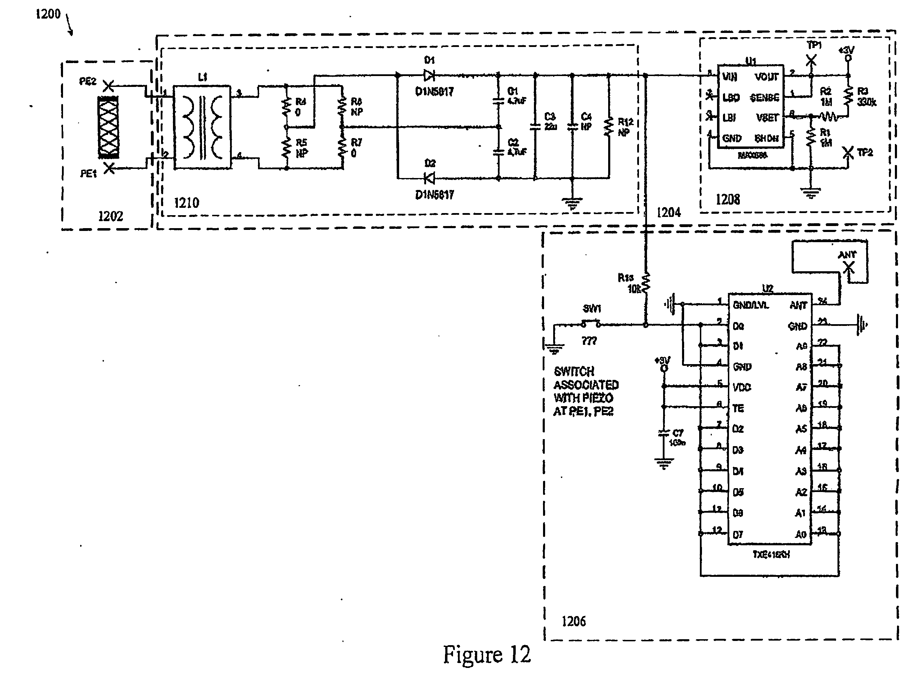

Figure 12 is a schematic of a self-powered sensor 1200. The sensor 1200 converts one form of energy (mechanical pressure) into another form of energy (radio frequency). The sensor 1200 includes a power generator 1202, a power conditioning unit 1204, and a transcoder 1206. In Figure 12, the power generator 1202 comprises a piezoelectric ceramic or element that may generate a brief high voltage and low current transient electrical output when subject to a mechanical pressure. The power generator 1202 is electrically connected to the power conditioning unit 1204. In Figure 12, the power conditioning unit 1204 includes discrete passive and active electrical elements 1210 and a voltage regulator 1208. In some systems, the elements 1210 may comprise discrete passive and/or active circuit components or may comprise integrated electrical components.

The circuit elements 1210 process the transient output of the power generator 1202 through rectification and smoothing. In Figure 12, the voltage regulator 1208 comprises an integrated element but in some other systems may comprise discrete passive and/or active electrical elements. Despite variations in the conditioned voltage from the circuit elements 1210, the voltage regulator 1208 may source a substantially constant voltage to the transcoder 1206. In Figure 12, the transcoder 1206 comprises an encryption unit and a radio frequency transmitter integrated in a unitary device. In alternate systems, the encryption unit and transmitter may be separate elements. When a source voltage is supplied to the transcoder 1206, a message is encrypted and transmitted as a radio frequency signal.

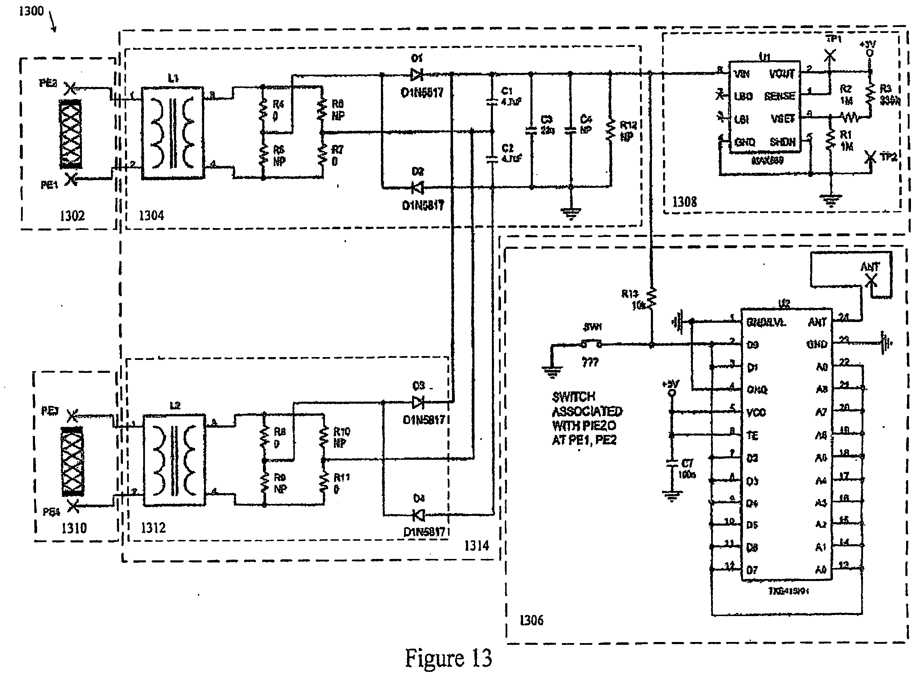

Figure 13 is a schematic of an alternative self-powered sensor 1300. The sensor 1300 includes power generators 1302 and 1310, a power conditioning unit 1314, and a transcoder 1306. Either one or both of the power generators 1302 and 1310 may convert a mechanical pressure into a high voltage and low current transient electrical output. In Figure 13, the power conditioning unit 1314 includes discrete passive and active electrical elements 1304 and 1312 and a voltage regulator 1308. The power generators 1302 and 1310 are electrically connected to elements 1304 and 1312, respectively. In some systems, the elements 1304 and 1312 may comprise a unitary component The elements 1304 and 1312 convert the transient output of the power generators 1302 and 1310 into a conditioned voltage source for the voltage regulator 1308. Despite variations in the conditioned voltage, the voltage regulator 1308 may source a substantially constant or momentary voltage to the transcoder 1306. In Figure 13, an encryption unit and a radio frequency transmitter that make up the transcoder 1306 comprise a unitary device. The encryption unit may comprise a code-hopping encoder that may change a transmitted code word with some or every transmission. When a source voltage is supplied to the transcoder 1306, a message is encrypted and transmitted as a radio frequency signal.

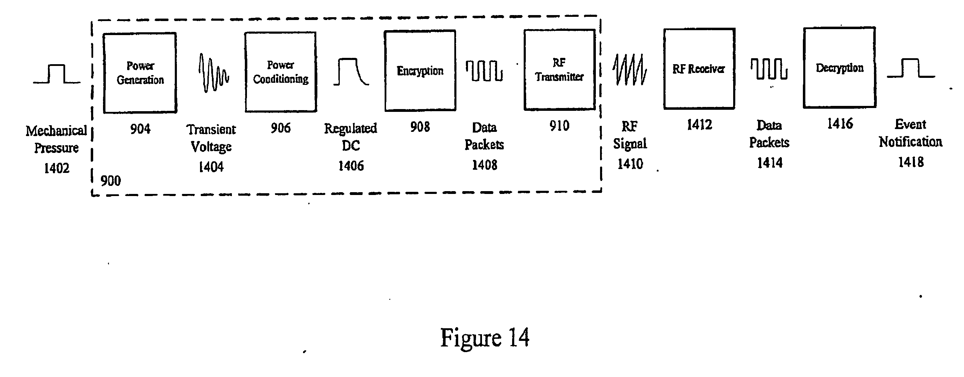

Figure 14 is a block diagram of the self-powered sensor 900 communicating a single event to a receiver 1412. A mechanical pressure or bias 1402 may be applied to a power generation unit 904 which generates a voltage and current 1404. The power conditioning unit 906 converts the output 1404 to a regulated direct current 1406. The regulated direct current 1406 may source an optional encryption unit 908 and/or a radio frequency transmitter 910. The encryption unit 908 may encode a message communicating the single event (e.g., sensed by the mechanical pressure 1402) into fixed or variable data packets 1408 for transmission by the transmitter 910. A radio frequency signal 1410 received by a radio frequency receiver 1412 is converted into data packets 1414. The data packets 1414 may be communicated to the optional decryption unit 1416 to restore the data to its original form. The decryption unit 1416 may decode, process, and/or validate the data packets into an event notification signal 1418. The signal 1418 may be adapted to determine what has been identified or requested. The event notification signal 1418 may be transmitted over a vehicle data bus to electronic control units within a vehicle. The encryption unit 908 and/or transmitter 910 may comprise a microcontroller, microprocessor, application specific integrated circuit, discrete circuitry, or a combination of other types of circuitry or logic.

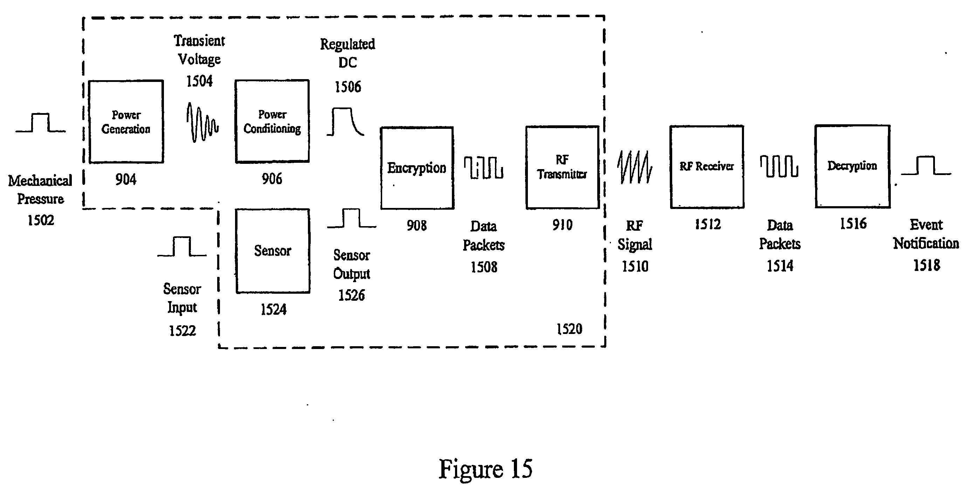

Figure 15 is a block diagram of a self-powered sensor 1520 communicating multiple events to a receiver 1512. A sensor 1524 may sense an event and generate an output 1526 to be encrypted and transmitted. A mechanical pressure 1502 may be applied to the power generation unit 904 that generates a voltage and current 1504. The power conditioning unit 906 converts the output 1504 to a regulated direct current 1506. The direct current 1506 may source an encryption unit 908, a radio frequency transmitter 910, and/or the sensor 1524. The sensor 1524 may comprise a unitary part of the encryption unit 908 and/or radio frequency transmitter 910 or may be a separate device. The sensor 1524 may detect different conditions by sensing changes in one, two, or more energy levels.

Prior to, at about the same time, or after the application of mechanical pressure 1502, an input 1522 into the sensor 1524 may occur. The sensor 1524 generates an output 1526 that may be sensed by the encryption unit 908. The encryption unit 908 may encode a message communicating one, two, or more events (i.e., in Figure 15, conditions sensed by the mechanical pressure I502 and the sensor input 1522) into data packets 1508 for transmission by the transmitter 910. A radio frequency signal 1510 may be received by a radio frequency receiver 1512. The receiver 1512 converts the signal 1510 into fixed or variable data packets 1514 that may be communicated to a decryption unit 1516. The decryption unit 1516 may decipher, process, and/or validate the data packets into an event notification signal 1518. The receiver 1512 and decryption unit 1516 may comprise a unitary device or may be comprised of separate components. The receiver 1512 may comprise a Remote Keyless Entry ("RKE") Receiver that enables or disables features within a vehicle or may comprise a remote receiver that facilitates other wireless communications.

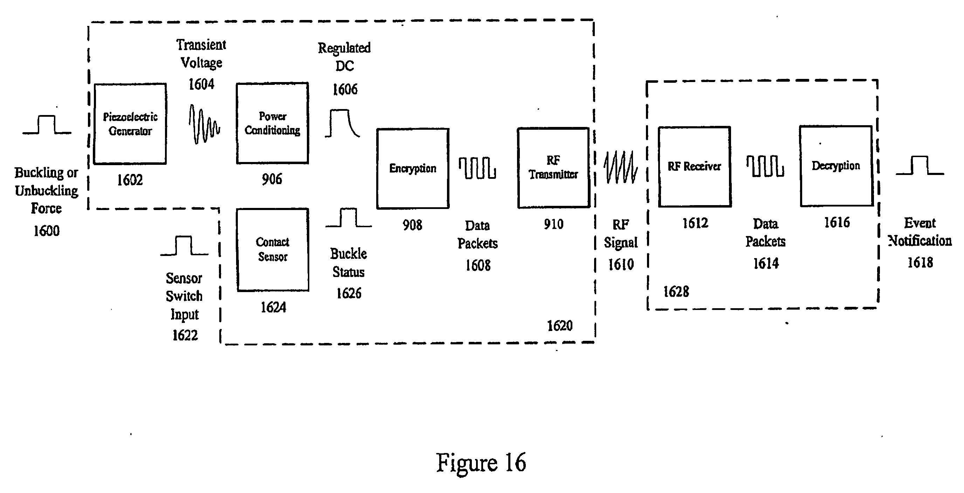

Figure 16 is a block diagram of a self-powered sensor 1620 communicating a safety belt buckle status. The sensor 1620 communicates a buckle status of a safety belt buckle to a receiver within a vehicle, such as a RKE Receiver 1628. The sensor 1620 may utilize a mechanical pressure 1600 generated upon a buckling or unbuckling of a safety belt to source a transmitter 910 and transmit a message indicating a buckle status. In Figure 16, the mechanical pressure 1600 generated upon the buckling or unbuckling of the safety belt may be applied to a piezoelectric generator 1602. The piezoelectric generator 1602 may generate a voltage and/or current output 1604. The transient output 1604 may be rectified and stored in the power conditioning unit 906. The power conditioning unit 906 may source a direct current voltage 1606 to an encryption unit 908, a radio frequency transmitter 910, and/or a contact sensor 1624.

Prior to, at about the same time, or after the application of the mechanical pressure 1600, the contact sensor 1624 may detect the buckling or unbuckling of the safety belt by a sensor switch input 1622. The contact sensor 1624 may generate a secondary buckle status signal 1626. The encryption unit 908 may encode a message communicating the buckle status into data packets 1608 for transmission by the transmitter 910. In Figure 16, a radio frequency signal 1610 may be received by the RKE Receiver 1628. The RKE Receiver 1628 may comprise a radio frequency receiver 1612 and a decryption unit 1616. A receiver element 1612 converts the signal 1610 into data 1614 that may be communicated to the optional decryption unit 1616. The decryption unit 1616 may decode, process, and/or validate the data packets into an event notification 1618. The event notification 1618 may be used to notify vehicle occupants of the buckle status of the safety belt through audio, visual, and/or tactile reminders, e.g., by an indicator light on the instrument panel, by a repetitive chiming noise, or other reminders. The signal 1618 may be transmitted wirelessly or over a vehicle data bus to electronic control units within a vehicle.

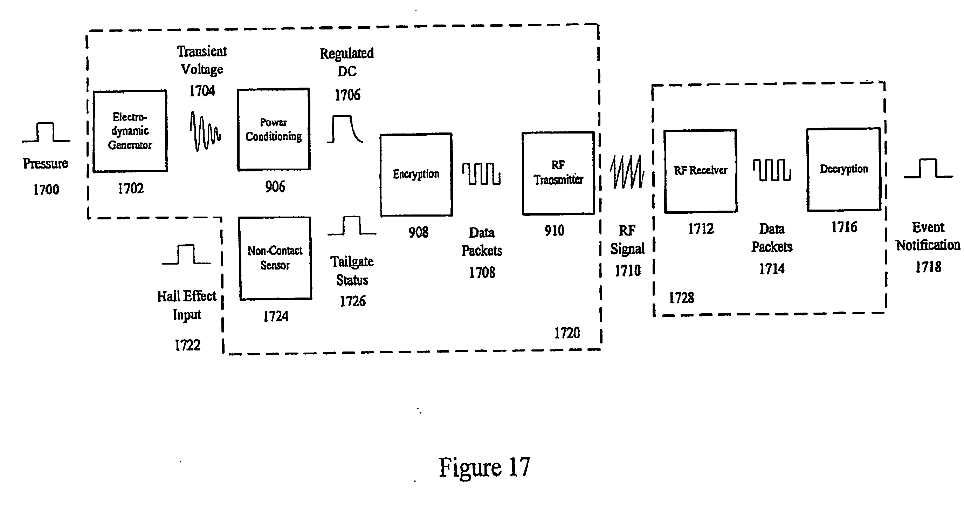

Figure 17 is a block diagram of a self-powered sensor 1720 communicating a door status, such as a tailgate status. The sensor 1720 communicates a status (e.g., up or down, open or closed, etc.) to a receiver within a vehicle, such as a RKE Receiver 1728. The sensor 1720 may utilize a magnetic or mechanical pressure 1700 to source a transmitter 910 and transmit a message indicating the status. In a non-mechanical application, a voltage and current 1704 may be induced by an eteetro-dynamic generator 1702 or other generator. The transient output 1704 may be rectified and stored in the power conditioning unit 906. The power conditioning unit 906 may supply a regulated direct current voltage 1706 to an encryption unit 908, a radio frequency transmitter 910, and/or a non-contact sensor 1724.

In Figure 17, a non-contact sensor 1724 may detect a condition of a tailgate by a Hall Effect input 1722. The non-contact sensor 1724 generates a tailgate status signal 1726. The optional encryption unit 908 may encode a message communicating the tailgate status into data 1708 for transmission by the transmitter 910. In Figure 17, a radio frequency signal 1710 may be received by the RKE Receiver 1728. A receiver 1712 converts the signal 1710 into data 1714 that may be communicated to the optional decryption unit 1716. The decryption unit 1716 may decode, process, and/or validate the data packets into an event notification signal 1718, which may be used to notify vehicle occupants of the tailgate status.

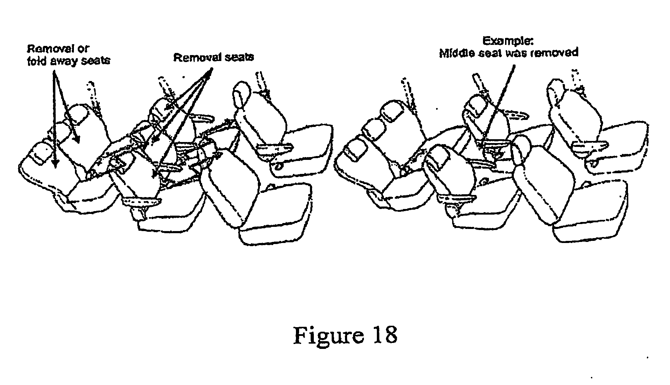

Figure 18 shows removable and foldaway seats coupled to self-powered sensors. Seats in a vehicle may be removed or folded away to create more space or if the seats are not needed without manually disconnecting any wiring. A self-powered sensor may be coupled to each removable or foldaway seat to indicate safety belt buckle status to vehicle occupants. A unique identification code may be assigned to each self-powered sensor on a removable or foldaway seat to individually identify the buckle status of the particular seat. In Figure 18, if the middle seat of the middle row of seats has been removed, the buckle status of the remaining seats may still be detected and transmitted by their respective self-powered sensor.

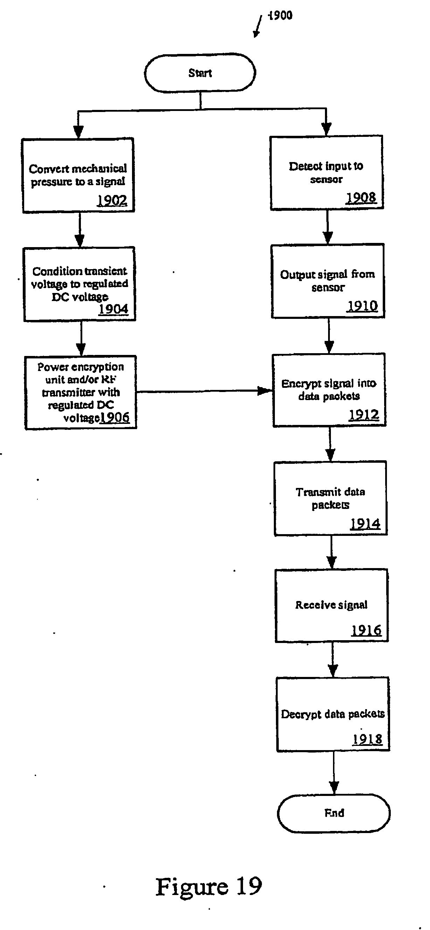

Figure 19 is a process 1900 in which a self-powered sensor transmits an encrypted signal. A mechanical pressure 1502 may be converted to an analog signal 1504 (Act 1902). The signal 1504 may be conditioned to a substantially constant voltage 1506 (Act 1904). The voltage 1506 may power an encryption unit 908 and/or radio frequency transmitter 910 (Act 1906). A sensor 1524 may detect an input 1522 of an event (Act 1908). The sensor 1524 may generate an output 1526 identifying the event (Act 1910). The encryption unit 908, sourced by the regulated voltage 1506 in Act 906, may encrypt the output of the sensor into fixed or variable data packets 1508 (Act 1912). The data packets 1508 may be transmitted to a receiver (Act 1914). A receiver may receive the incoming signals (Act 1916) and the data packets may be decrypted into an event notification signal 1518 for use in the system (Act 1918). The system may determine what has been identified or requested.

Specific components of a self-powered sensor may include additional or different components. The voltage regulator, encryption unit, and/or decryption unit may be optional. Specific components may be implemented as a microcontroller, microprocessor, application specific integrated circuit, discrete circuitry, or a combination of other types of circuitry or logic. Logical functions or any element described may be implemented through digital circuitry, through source code, through analog circuitry, or through an analog source such as through an electrical, audio, video, or optical signal. The wireless communication signal may be implemented as a radio frequency signal, a microwave signal, an infrared or other optical signal, an acoustic signal, or other form of signal.

The self-powered sensor may be used with other technologies that detect or measure conditions. In some applications, multiple self-powered sensors may detect seat belt engagement and the presence of an occupant. If positioned below or within a seat, the self-powered sensor may identify an occupant's location by sensing their presence or weight. If a seat is in use and an occupant has not buckled their safety belt, a controller coupled to the receiver or transceiver may issue an audio, visual, and/or tactile reminder to the occupant, driver, or other occupants of the vehicle through one or more output devices. The self-powered sensors may also be used with other in-vehicle and out-vehicle systems. In vehicles, the self-powered sensor may monitor or identify unlatched doors, roofs, hoods, latches, compartments, antennas, unlocked doors, or differentiate a child from an adult If a child is identified by sensing the level of voltage generated by the piezoelectric ceramic or element, other vehicle safety devices may be enabled or disabled (e.g., an air bag may be disabled or inflation rate modified). Other vehicle applications may include a controller coupled to the receiver or transceiver activating a light inside a vehicle when a door is opened; or detecting the status of a refrigerator, water pump, antenna, or other components in a camper, trailer, or recreational vehicle. Outside of a vehicle the self-powered sensor may be used with any wireless transmitter including keyless entry systems and/or remote controls.

While the self-powered sensor is described in the context of a vehicle, the self-powered sensor may also be used in non-vehicle applications to sense or monitor conditions. A self powered sensor may monitor and/or identify doors, gates, windows, or the presence or absence of a person or thing. For example, if a self-powered sensor identifies that a door, gate, or window is open, or the presence or absence of a person or thing, a controller coupled to the receiver or transceiver may issue audio, visual, and/or tactile notifications through an output device. Based on the status, the controller may also control a device to turn it on or off. to perform a function, and/or to perform other actions (e.g., a fan may start when a person enters a ventilated area, a light may activate when a door is opened or when a vehicle pulls into a driveway, etc.). In some applications, a self-powered sensor may be used in a remote control unit (e.g., controlling a television, audio system, video tape recorder, etc.) to transmit a signal when a button is pushed. In a computer application, a self-powered sensor may be used to wirelessly transmit keystrokes, mouse movements, or other remote user interface inputs to the computer. Other applications may include detecting the latch status of a swimming pool gate, a garage door, or other doors, windows, or gates, which may be optionally integrated with an alarm system; detecting the presence of a person or thing (e.g., sensing the presence of a vehicle in a parking lot space, sensing the presence of a person in a movie theatre seat, transmitting the location of a person or thing using a Global Positioning System receiver, etc.); or as a source of generating energy for flashlights, portable radios, etc.

While various embodiments have been described, it will be apparent to those of ordinary skill in the art that many more embodiments and implementations are possible within the scope of the invention. Accordingly, the invention is not to be restricted except in light of the attached claims.

## Claims

1. A wireless sourceless sensor (1000) for a vehicle seat belt buckle comprising:
a first transducer that generates an output when subjected to a pressure; and
a transcoder electrically connected to the first transducer and arranged to convert an output of the first transducer to a wireless communication signal, the transcoder being adapted to receive a second wireless communication from an external source, **characterised in that** the sensor is adaped for update using information contained in the second wireless communication.

2. The wireless sourceless sensor of claim 1, where the first transducer comprises a piezoelectric generator electrically coupled to a power conditioning unit.

3. The wireless sourceless sensor of claim 2, where the power conditioning unit comprises a transformer and a voltage regulator.

4. The wireless sourceless sensor of claim 1, where the transcoder comprises an encryption unit coupled to a transmitter.

5. The wireless sourceless sensor of claim 4, where the encryption unit comprises a code-hopping encoder.

6. The wireless sourceless sensor of claim 1, where the pressure comprises a magnetic pressure.

7. The wireless sourceless sensor of claim 1, where the wireless communication signal comprises a radio frequency signal.

8. The wireless sourceless sensor of claim 1, where the transcoder comprises an encryption unit coupled to a transceiver.

9. The wireless sourceless sensor of claim 1. further comprising a sensor coupled to the transcoder, the second transducer comprising an encryption unit electrically connected to a transmitter.

10. The wireless sourceless sensor of claim 9, where the encryption unit is adpted to encode an output of the sensor.

11. The wireless sourceless sensor of claim 9, where the sensor is adapted to detect when a belt buckle is engaged or released.

12. The wireless sourceless sensor of claim 11 where the belt buckle is coupled to a lap belt.

13. The wireless sourcaless sensor of claim 11 where the belt buckle ia coupled to a shoulder harness.

14. A method of powering a wireless sourceless sensor for a vehicle seat belt buckle and transmitting an encrypted signal, comprising:
converting a mechanical pressure to a first electrical signal;
conditioning the first electrical signal to a second electrical signal;
sourcing an encryption unit and a transceiver with the second electrical signal;
encrypting the second electrical signal into a data packet;
transmitting the data packet;
receiving a wireless signal from an external source; and **characterised in that**
utilizing information contained in the received wireless signal to update the the to the wireless sourceless sensor.

15. The method of claim 14, further comprising sensing an event; and generating a signal indicating the event.

16. The method of claim 15, where sensing an event comprises sensing when a belt buckle is engaged or released.

17. The method of claim 15, further comprising sourcing a sensor with the second electrical signal.

18. The method of claim 14, where conditioning the first electrical signal to a second electrical signal comprises rectifying the first electrical signal; and regulating the first electrical signal to the second electrical signal.

19. The method of claim 14, where encrypting the second electrical signal into a data packet comprises encoding a unique identification code in the data packet.

20. The method of claim 14, where the information contained in the received wireless signal is further utilizable to synchronize code words or provide other commands.

21. The method of claim 14, further comprising receiving the data packet; and decrypting the data packet into an event notification signal.

22. The method of claim 14 wherein the belt buckle is coupled to a lap belt.

23. The method of claim 14 wherein the belt buckle is coupled to a shoulder harness.

## Patentansprüche

1. Drahtloser quellenfreier Sensor (1000) für ein Fahrzeug-Sicherheitsgurtschloss, welcher Folgendes aufweist:
einen ersten Transducer, welcher ein Ausgangssignal erzeugt, sobald er einem Druck ausgesetzt wird; und
einen Codeumsetzer, welcher mit dem ersten Transducer elektrisch verbunden ist und derart angeordnet ist, dass er ein Ausgangssignal des ersten Transducers in ein drahtloses Kommunikationssignal umwandelt, wobei der Codeumsetzer ausgelegt ist, um eine zweite drahtlose Kommunikation von einer externen Quelle zu empfangen, **dadurch gekennzeichnet, dass** der Sensor für eine Aktualisierung unter Verwendung von in der zweiten drahtlosen Kommunikation enthaltenen Informationen ausgelegt ist.

2. Drahtloser quellenfreier Sensor nach Anspruch 1, **dadurch gekennzeichnet, dass** der erste Transducer einen piezoelektrischen Generator aufweist, welcher mit einer Energieaufbereitungseinheit elektrisch gekoppelt ist.

3. Drahtloser quellenfreier Sensor nach Anspruch 2, **dadurch gekennzeichnet, dass** die Energieaufbereitungseinheit einen Transformator bzw. Wandler und einen Spannungsregler aufweist.

4. Drahtloser quellenfreier Sensor nach Anspruch 1, **dadurch gekennzeichnet, dass** der Codeumsetzer eine mit einem Transmitter gekoppelte Verschlüsselungseinheit aufweist.

5. Drahtloser quellenfreier Sensor nach Anspruch 4, **dadurch gekennzeichnet, dass** die Verschlüsselungseinheit einen Code-Hopping-Encoder aufweist.

6. Drahtloser quellenfreier Sensor nach Anspruch 1, **dadurch gekennzeichnet, dass** der Druck einen magnetischen Druck aufweist.

7. Drahtloser quellenfreier Sensor nach Anspruch 1, **dadurch gekennzeichnet, dass** das drahtlose Kommunikationssignal ein Funkfrequenzsignal aufweist.

8. Drahtloser quellenfreier Sensor nach Anspruch 1, **dadurch gekennzeichnet, dass** der Codeumsetzer eine Verschlüsselungseinheit aufweist, welche mit einem Sendeempfänger gekoppelt ist.

9. Drahtloser quellenfreier Sensor nach Anspruch 1, welcher des Weiteren einen mit dem Codeumsetzer gekoppelten Sensor aufweist, wobei der zweite Transducer eine mit einem Transmitter elektrisch verbundene Verschlüsselungseinheit aufweist.

10. Drahtloser quellenfreier Sensor nach Anspruch 9, **dadurch gekennzeichnet, dass** die Verschlüsselungseinheit zur Codierung eines Ausgangssignals des Sensors ausgelegt ist.

11. Drahtloser quellenfreier Sensor nach Anspruch 9, **dadurch gekennzeichnet, dass** der Sensor derart ausgelegt ist, dass er erfasst, wann ein Gurtschloss geschlossen oder geöffnet ist.

12. Drahtloser quellenfreier Sensor nach Anspruch 11, **dadurch gekennzeichnet, dass** das Gurtschloss mit einem Beckengurt verbunden ist.

13. Drahtloser quellenfreier Sensor nach Anspruch 11, **dadurch gekennzeichnet, dass** das Gurtschloss mit einem Schultergurt verbunden ist.

14. Verfahren zum Betreiben eines drahtlosen quellenfreien Sensors für ein Fahrzeug-Sicherheitsgurtschloss und zum Übertragen eines verschlüsselten Signals; wobei das Verfahren die folgenden Schritte aufweist:
Umwandeln eines mechanischen Drucks in ein erstes elektrisches Signal;
Aufbereiten des ersten elektrischen Signals in ein zweites elektrisches Signal;
Belegen einer Verschlüsselungseinheit und eines Sendeempfängers mit dem zweiten elektrischen Signal;
Verschlüsseln des zweiten elektrischen Signals in ein Datenpaket;
Übertragen bzw. Senden des Datenpakets;
Empfangen eines drahtlosen Signals von einer externen Quelle; und wobei das Verfahren **gekennzeichnet ist durch**
Verwendung von Informationen, welche in dem empfangenen drahtlosen Signal enthalten sind, zur Aktualisierung des drahtlosen quellenfreien Sensors.

15. Verfahren nach Anspruch 14, welches des Weiteren den Schritt der Erfassung eines Ereignisses aufweist; sowie die Erzeugung eines Signals, welches das Ereignis anzeigt.

16. Verfahren nach Anspruch 15, **dadurch gekennzeichnet, dass** die Erfassung eines Ereignisses die Erfassung aufweist, sobald ein Gurtschloss geschlossen oder geöffnet wird.

17. Verfahren nach Anspruch 15, welches des Weiteren das Belegen eines Sensors mit dem zweiten elektrischen Signal aufweist.

18. Verfahren nach Anspruch 14, **dadurch gekennzeichnet, dass** die Aufbereitung des ersten elektrischen Signals in ein zweites elektrisches Signal die Gleichrichtung bzw. Demodulation des ersten elektrischen Signals aufweist; sowie die Regulierung des ersten elektrischen Signals auf das zweite elektrische Signal.

19. Verfahren nach Anspruch 14, **dadurch gekennzeichnet, dass** die Verschlüsselung des zweiten elektrischen Signals in ein Datenpaket die Codierung eines eindeutigen Kennzeichnungscodes in dem Datenpaket aufweist.

20. Verfahren nach Anspruch 14, **dadurch gekennzeichnet, dass** die in dem empfangenen drahtlosen Signal enthaltenen Informationen weiter zur Synchronisierung von Codewörtern oder zur Bereitstellung anderer Befehle verwendbar sind.

21. Verfahren nach Anspruch 14, welches des Weiteren den Empfang des Datenpakets aufweist; sowie die Entschlüsselung des Datenpakets in ein Ereignis-Benachrichtigungssignal.

22. Verfahren nach Anspruch 14, **dadurch gekennzeichnet, dass** das Gurtschloss mit einem Beckengurt gekoppelt ist.

23. Verfahren nach Anspruch 14, **dadurch gekennzeichnet, dass** das Gurtschloss mit einem Schultergurt gekoppelt ist.

## Revendications

1. Capteur sans source sans fil (1000) pour une boucle de ceinture de siège de véhicule, comprenant:
un premier transducteur qui produit une sortie lorsqu'il est soumis à une pression; et
un transcodeur électriquement connecté au premier transducteur et agencé pour convertir une sortie du premier transducteur en un signal de communication sans fil, le transcodeur étant apte à recevoir une deuxième communication sans fil d'une source externe, **caractérisé en ce que** le capteur est conçu pour une mise à jour en utilisant des informations se trouvant dans la deuxième communication sans fil.

2. Capteur sans source sans fil selon la revendication 1, dans lequel le premier transducteur comprend un générateur piézo-électrique électriquement couplé à une unité de conditionnement de puissance.

3. Capteur sans source sans fil selon la revendication 2, dans lequel l'unité de conditionnement de puissance comprend un transformateur et un régulateur de tension.

4. Capteur sans source sans fil selon la revendication 1, dans lequel le transcodeur comprend une unité de cryptage couplée à un transmetteur.

5. Capteur sans source sans fil selon la revendication 4, dans lequel l'unité de cryptage comprend un saut codeur code.

6. Capteur sans source sans fil selon la revendication 1, dans lequel la pression comprend une pression magnétique.

7. Capteur sans source sans fil selon la revendication 1, dans lequel le signal de communication sans fil comprend un signal de radiofréquence.

8. Capteur sans source sans fil selon la revendication 1, dans lequel le transcodeur comprend une unité de cryptage couplée à un émetteur-récepteur.

9. Capteur sans source sans fil selon la revendication 1, comprenant en outre un capteur couplé au transcodeur, le deuxième transducteur comprenant une unité de cryptage électriquement connectée à un transmetteur.

10. Capteur sans source sans fil selon la revendication 9, dans lequel l'unité de cryptage est apte à coder une sortie du capteur.

11. Capteur sans source sans fil selon la revendication 9, dans lequel le capteur est apte à détecter lorsqu'une boucle de ceinture est engagée ou libérée.

12. Capteur sans source sans fil selon la revendication 11, dans lequel la boucle de ceinture est couplée à une ceinture sous-abdominale.

13. Capteur sans source sans fil selon la revendication 11, dans lequel la boucle de ceinture est couplée à une ceinture harnais.

14. Procédé d'alimentation d'un capteur sans source sans fil pour une boucle de ceinture de siège de véhicule et pour transmettre un signal crypté, comprenant:
convertir une pression mécanique en un premier signal électrique;
conditionner le premier signal électrique en un deuxième signal électrique;
approvisionner une unité de cryptage et un émetteur-récepteur avec le deuxième signal électrique;
crypter le deuxième signal électrique dans un paquet de données;
transmettre le paquet de données;
recevoir un signal sans fil d'une source externe; et **caractérisé en ce qu'**on utilise l'information se trouvant dans le signal sans fil reçu pour mettre à jour le capteur sans source, sans fil.

15. Procédé selon la revendication 14, comprenant en outre la détection d'un évènement; et la production d'un signal indiquant l'évènement.

16. Procédé selon la revendication 15, dans lequel la détection d'un évènement comprend la détection lorsqu'une boucle de ceinture est engagée ou libérée.

17. Procédé selon la revendication 15, comprenant en outre l'approvisionnement d'un capteur avec un deuxième signal électrique.

18. Procédé selon la revendication 14, dans lequel le conditionnement du premier signal électrique en un deuxième signal électrique comprend la rectification du premier signal électrique; et la régulation du premier signal électrique au deuxième signal électrique.

19. Procédé selon la revendication 14, dans lequel le cryptage du deuxième signal électrique en un paquet de données comprend le codage d'un code d'identification unique dans le paquet de données.

20. Procédé selon la revendication 14, dans lequel l'information se trouvant dans le signal sans fil reçu peut être utilisée en outre pour synchroniser des mots de code ou pour réaliser d'autres commandes.

21. Procédé selon la revendication 14, comprenant en outre la réception du paquet de données; et le décryptage du paquet de données en un signal de notification d'évènement.

22. Procédé selon la revendication 14, dans lequel la boucle de ceinture est couplée à une ceinture sous-abdominale.

23. Procédé selon la revendication 14, dans lequel la boucle de ceinture est couplée à une ceinture harnais.
